# EUROPÄISCHE PATENTSCHRIFT

(11) **EP 3 581 523 B1**
(45) Veröffentlichungstag und Bekanntmachung des Hinweises auf die Patenterteilung: **23.04.2025**
(21) Anmeldenummer: 19177187.2
(22) Anmeldetag: 29.05.2019
(51) Int. Cl.: B65G 1/137, B65G 47/61

(54) **VORRICHTUNG UND VERFAHREN ZUM AUFTRAGSORIENTIERTEN BEREITSTELLEN VON EINZELWAREN MEHRERER AUFTRÄGE AN EINEM PACKPLATZ**
DEVICE AND METHOD FOR THE ORDER-BASED PROVISION OF INDIVIDUAL GOODS FOR A PLURALITY OF ORDERS FROM A PACKING LOCATION
DISPOSITIF ET PROCÉDÉ DE MISE À DISPOSITION, EN FONCTION DE LA DEMANDE, DE MARCHANDISES INDIVIDUELLES POUR PLUSIEURS DEMANDES SUR UN POSTE D'EMBALLAGE

(30) Priorität: 11.06.2018 DE 102018209266
(43) Veröffentlichungstag der Anmeldung: 18.12.2019
(60) Teilanmeldung: 25154301.3
(73) Patentinhaber: Dürkopp Fördertechnik GmbH, 33719 Bielefeld (DE)
(72) Erfinder: Völker, Sigurd, 32602 Vlotho (DE)
(74) Vertreter: Rau, Schneck & Hübner Patentanwälte Rechtsanwälte PartGmbB

(56) Entgegenhaltungen:
- WO-A1-98/06645
- WO-A2-2006/029212
- WO-A2-2009/121090
- WO-A2-2012/024714
- DE-A1- 102004 014 378
- DE-A1- 102011 015 138
- DE-A1- 102012 018 925
- DE-U1- 202017 100 206
- DE-U1- 29 806 960
- JP-A- 2000 177 835
- US-A- 4 274 783
- US-A1- 2014 284 254
- US-A1- 2018 025 410
- US-B1- 6 208 908

## Beschreibung

Die vorliegende Patentanmeldung nimmt die Priorität der deutschen Patentanmeldung DE 10 2018 209 266.4 in Anspruch.

Die Erfindung betrifft eine Vorrichtung und ein Verfahren zum auftragsorientierten Bereitstellen von Einzelwaren mehrerer Aufträge an einem Packplatz einer Hängeförderanlage.

Derartige Vorrichtungen und Verfahren sind bekannt aus US 2014/284254 A1, WO 2006/029 212 A2, DE 10 2011 015 138 A1, DE 10 2004 014 378 A1, JP 2000 177 835 A und WO 2009/121 090 A2.

Eine Aufteileinrichtung mit wärmeisolierenden Speicherrutschen ist aus WO 98/06645 A1 bekannt. Die US6208908B1 offenbart die Merkmale des Oberbegriffs des Anspruchs 1.

Einzelwaren aus einem Wareneingang und/oder einem Warenlager können in einer Förderanlage mittels Transporttaschen vereinzelt transportiert werden. Die mit Einzelwaren beladenen Transporttaschen werden zu einem Packplatz transportiert und dort zum Packen aus den Transporttaschen entladen und gesammelt. Wenn alle Einzelwaren eines Auftrags komplett am Packplatz vorliegen, kann der Auftrag gepackt und abtransportiert werden. Um sicherzustellen, dass Einzelwaren verschiedener Aufträge nicht vermischt werden, werden Einzelwaren eines folgenden Auftrags am Packplatz erst dann entladen, wenn der vorherige Auftrag vollständig abgearbeitet ist. Während dieser Wartedauer ist der Packplatz blockiert. Die Förderung der Einzelwaren in einer derartigen Anlage ist unflexibel. Die Förderrate ist reduziert. Insbesondere ist die Förderrate der Hängeförderanlage abhängig von der Verarbeitungsgeschwindigkeit am Packplatz, die insbesondere manuell erfolgt.

Es ist die Aufgabe der vorliegenden Erfindung, die Förderung von Einzelwaren, in einer Hängeförderanlage, flexibler und effizienter zu gestalten.

Diese Aufgabe ist erfindungsgemäß gelöst durch eine Hängeförderanlage mit den im Anspruch 1 angegebenen Merkmalen sowie durch ein Verfahren mit den im Anspruch 9 angegebenen Merkmalen.

Erfindungsgemäß wurde erkannt, dass an einem Packplatz einer einer Hängeförderanlage, ein Parkbereich zum Parken von Einzelwaren eines Auftrags eine erweiterte Flexibilität ermöglicht. Einzelwaren, die in der Hängeförderanlage an den Packplatz transportiert werden, können in eine Förderbahn einer Vorrichtung abgegeben werden. Die Vorrichtung kann auch mehrere Förderbahnen umfassen. Die Vorrichtung kann zum Versandverpacken im E-Commerce eingesetzt werden. Ein Auftrag im E-Commerce umfasst typischerweise drei bis vier Einzelteile. Die Vorrichtung kann auch Aufträge mit mehreren Einzelteilen verarbeiten. Ein Auftrag, der aus einer Vielzahl von Einzelwaren besteht, insbesondere mehr als 10 Einzelwaren, insbesondere mehr als 100 Einzelwaren, insbesondere mehr als 1.000 Einzelwaren und insbesondere mehr als 10.000 Einzelwaren, kann an der Vorrichtung auf mehrere Förderbahnen aufgeteilt werden, um die Einzelwaren effizient am Packplatz bereitzustellen. Über eine Zuführöffnung werden die Einzelwaren der Förderbahn zugeführt und zu einer damit fördertechnisch verbundenen Abgabeöffnung gefördert. Die Einzelwaren werden auftragsorientiert an der Abgabeöffnung bereitgestellt. Der Parkbereich ermöglicht ein Zwischenpuffern der Einzelwaren eines Folgeauftrags, solange die Einzelwaren eines vorherigen Auftrags am Packplatz noch verarbeitet werden. Als Zuführöffnung eines geschlossenen, Förderschachts, wird das Ende des Förderschachts verstanden, an dem die Einzelwaren in den Förderschacht gelangen. Entsprechend ist die Abgabeöffnung die Öffnung des geschlossenen Schachts, an dem die Einzelwaren entnommen werden können.

Auf die Art der Förderung von der Zuführöffnung zur Abgabeöffnung kommt es nicht an. Die Förderung kann selbsttätig, insbesondere schwerkraftbedingt erfolgen. Die Förderung kann auch mittels eines angetriebenen Fördermittels erfolgen. Die Förderbahn gibt eine Förderrichtung vor, die von der Zuführöffnung zu der Abgabeöffnung hin orientiert ist.

Die Vorrichtung weist eine Fördervorrichtung auf, mit der Einzelwaren, insbesondere jeweils in einer Transporttasche, hängend gefördert werden können. An einer Entladestation können die Einzelwaren aus den Transporttaschen, insbesondere automatisch, entladen werden. An der Entladestation werden die Transporttaschen insbesondere automatisch geöffnet, sodass die Einzelwaren in Folge der Schwerkraft nach unten aus den Transporttaschen herausfallen. Die Einzelwaren können selbsttätig durch die Zuführöffnung in die Förderbahn gelangen. An dem Packplatz werden die Einzelwaren auftragsorientiert gepackt und anschließend abtransportiert. Es ist insbesondere möglich, dass das Entladen der Transporttaschen an der Entladestation erfolgt, während die Transporttaschen entlang einer Transportrichtung transportiert werden. Dazu kann insbesondere in der Entladestation ein Entladestation-Korridor definiert sein, innerhalb dessen das automatische Entladen der Transporttaschen stattfindet. Die Länge des Entlade-Korridors ist insbesondere von der Transportgeschwindigkeit der Transporttaschen und/oder von der Größe der Zuführöffnungen abhängig.

Besonders vorteilhaft ist es, wenn die Einzelwaren eines Auftrags vorsortiert, insbesondere auftragsorientiert, der Vorrichtung zugeführt werden, also insbesondere vorsortiert an die Förderbahn abgegeben werden. Es ist insbesondere vorteilhaft, die Zeitspanne zwischen der ersten Einzelware eines Auftrags, die am Packplatz ankommt, und der letzten Einzelware dieses Auftrags, die am Packplatz ankommt, zu reduzieren. Dadurch wird die Zeitspanne, in der die Förderbahn mit den Einzelwaren des Auftrags gefüllt und damit für Folgeaufträge blockiert ist, reduziert. Die Auslastung der Vorrichtung insgesamt wird erhöht. Erfindungsgemäß ist die Vorrichtung aber auch geeignet, eine sogenannte Zielstellensortierung zu ermöglichen, indem die Einzelwaren, die unsortiert an die Vorrichtung abgegeben werden, mittels der Vorrichtung zu sortieren und den verschiedenen Abgabeöffnungen auftragsabhängig zuzuordnen. Die Vorrichtung ermöglicht ein Zwischenpuffern von Einzelwaren am Packplatz. Die Vorrichtung ermöglicht insbesondere auch ein Sortieren der Einzelwaren nach Aufträgen.

Ein Signalelement zum Signalisieren, dass an der Abgabeöffnung die Einzelwaren eines vollständigen Auftrags bereitgestellt sind, signalisiert einer Bedienperson, insbesondere am Packplatz, die Abgabeöffnung, an der die Einzelwaren eines vollständigen Auftrags vorliegen. Die Bedienperson kann diesen Auftrag als nächstes abarbeiten. Insbesondere ist es denkbar, mittels einer Steuereinheit, die insbesondere mit dem Signalelement in Signalverbindung steht, insbesondere bidirektional, der Bedienperson anzuzeigen, welcher Auftrag zunächst abzuarbeiten, also zu packen, ist. Das Signalelement ermöglicht ein optisches, akustisches und/oder anders geartetes Signal, um beispielsweise Technologien wie Pick-By-Light, Pick-By-Voice und/oder Pick-By-Vision am Packplatz zu ermöglichen.

Zusätzlich zu dem Signalelement kann ein Rückhalteelement vorgesehen sein, das die Bedienperson daran hindert, Einzelwaren eines Auftrags an der Abgabeöffnung unberechtigt zu entnehmen. Das Rückhaltelement ist beispielsweise eine mechanische Trenneinrichtung, die insbesondere in Form einer manuell nicht öffenbaren Klappe, eines Korbes oder eines Abstandshalters für die Bedienperson ausgeführt sein kann. Das Rückhaltelement verhindert die Bearbeitung von Aufträgen, die noch nicht bearbeitet werden sollen oder können, weil sie beispielsweise unvollständig sind, eine niedrige Priorität haben und/oder verzögert ausgeliefert werden sollen. Eine derartige Ausgestaltung ist insbesondere bei der Förderung von Einzelwaren erforderlich, die eine hohe Prozesssicherheit erfordern, wie beispielsweise die Pharmabranche.

Geneigte Ausführungen der Zuführöffnung und/oder der Abgabeöffnung vereinfachen die automatisierte Zuführung und Entnahme der Einzelwaren in die Förderbahn und aus der Förderbahn.

Eine Hängeförderanlage mit einer derartigen Vorrichtung weist im Wesentlichen die Vorteile der Vorrichtung selbst auf, worauf hiermit verwiesen wird.

Eine Vorrichtung gemäß Anspruch 2 vereinfacht die getrennte Aufgabe von Einzelwaren unterschiedlicher Aufträge. Die Vorrichtung umfasst mindestens zwei Förderbahnen. Die Anzahl der Förderbahnen und deren Zuweisung zu den Packplätzen kann variabel ausgeführt sein. Die Einzelwaren eines ersten Auftrags werden an eine erste Förderbahn und die Einzelwaren eines zweiten Auftrags an eine zweite Förderbahn abgegeben. Die erste und die zweite Förderbahn sind physikalisch voneinander getrennt und insbesondere als separate Förderschächte, Förderrutschen, Wendelrutschen und/oder Gurtbänder ausgeführt. Dadurch ist es möglich, dass Einzelwaren des zweiten Auftrags bereits in die zweite Förderbahn abgegeben werden, während die Einzelwaren des ersten Auftrags noch in die erste Förderbahn abgegeben und/oder am Packbereich noch verarbeitet werden. Insbesondere ist es nicht erforderlich, dass die Einzelwaren bereits auftragsorientiert, also sortiert, zu der Vorrichtung gefördert werden. An der Vorrichtung, die eine Zielstelle darstellt, kann eine sogenannte Zielstellensortierung erfolgen.

Eine Vorrichtung gemäß Anspruch 3 ermöglicht eine kompakte Ausführung von Förderbahn und Parkbereich. Mit einem Trennelement kann der Parkbereich in die Förderbahn integriert werden. Das Trennelement ist insbesondere ein mechanisches Trennelement, insbesondere in Form einer Schwenkklappe oder eines Schiebers. Mittels des Trennelements kann die Verbindung von Zuführöffnung zu Abgabeöffnung entlang der Förderrichtung zumindest zeitweise unterbrochen werden. Dadurch ist es möglich, Einzelwaren eines Folgeauftrags in die Förderbahn abzugeben, während die Einzelwaren des vorherigen Auftrags an der Abgabeöffnung noch verarbeitet werden. Dadurch, dass die Einzelwaren des Folgeauftrags durch das Trennelement an der Förderung zur Abgabeöffnung gehindert sind, ist ein Vermischen der Einzelwaren verschiedener Aufträge zuverlässig verhindert.

Das Trennelement kann auch als Weichenklappe ausgeführt sein. Bei einer derartigen Ausführung weist die Förderbahn insbesondere eine Zuführöffnung und zwei Abgabeöffnungen auf, wobei an der ersten Abgabeöffnung die Einzelwaren des ersten Auftrags und an der zweiten Abgabeöffnung die Einzelwaren des zweiten Auftrags gesammelt werden. Besonders unkompliziert ist eine derartige Förderbahn dann, wenn die Einzelwaren bereits auftragsorientiert, also nach Aufträgen sortiert, an die Förderbahn abgegeben werden. In diesem Fall werden zunächst alle Einzelwaren des ersten Auftrags der ersten Abgabeöffnung zugeführt, dann die Weichenzunge geschaltet und anschließend die Einzelwaren der zweiten Abgabeöffnung zugeführt. Es ist zusätzlich denkbar, dass die Weichenzunge mittels einer Steuereinheit in bidirektionaler Signalverbindung steht, um in Abhängigkeit der der Zuführöffnung zugeführten Einzelware die Schaltstellung der Weichenzunge zu verändern, sodass in der Förderbahn eine Sortierung der Einzelwaren nach dem ersten und dem zweiten Auftrag erfolgt.

Mehrere Förderbahnen gemäß Anspruch 4 ermöglichen eine besonders hohe Flexibilität bei der Handhabung und Sortierung der Einzelwaren sowie eine hohe Durchsatzrate bei der Warenförderung. Die Förderbahnen erfüllen eine Pufferfunktion, um zwischen Schwankungen in der Anzahl bereitgestellter und gepackter Aufträge auszugleichen. Die Pufferfunktion ist insbesondere vorteilhaft, wenn die Anzahl belegter und freier Förderbahnen überwacht und dem Anlagenbetreiber zur Verfügung gestellt wird. Anhand dieser Informationen kann der Anlagenbetreiber Bedienpersonen hinzufügen oder abziehen.

Durch eine kompakte Anordnung der Zuführöffnungen und Abgabeöffnungen ist das Entladen der Einzelwaren aus den Transporttaschen und das Packen der Einzelwaren zu Aufträgen platzsparend möglich.

Ein Stoppelement gewährleistet ein definiertes Bereitstellen der Einzelwaren an der Abgabeöffnung. Das Stoppelement kann eine Schwenkklappe oder ein Schieber an der Abgabeöffnung sein, das geöffnet wird, wenn die Einzelwaren zu packen sind. Das Öffnen des Stoppelements kann auch automatisiert erfolgen. Das Stoppelement kann auch eine Halteleiste sein, die insbesondere am Ende einer geneigten Rutschbahn oder eines geneigten Schachts einen unkontrollierten Weitertransport der Einzelwaren verhindert.

Das Stoppelement kann insbesondere zusätzlich zu dem Rückhaltelement eingesetzt werden.

Eine Ausführung der Förderbahn gemäß Anspruch 7 ermöglicht eine besonders unaufwändige Förderung der Einzelwaren entlang der Förderbahn. Insbesondere ist eine selbststätige, schwerkraftbedingte Förderung möglich.

Ein Sensor gemäß Anspruch 8 ermöglicht eine flexible Bedienung der Vorrichtung. Mittels des Sensors kann insbesondere ein Abwurf einer Einzelware aus einer Transporttasche der Hängeförderanlage in die Förderbahn der Vorrichtung erfasst werden. Entlang der Hängeförderanlage und der Vorrichtung können weitere Sensoren angeordnet sein, um die jeweilige Position der Transporttasche zu erkennen. Die Kombination aus bekannter Identität und Position der Transporttasche sowie der Bestätigung des Abwurfs einer Einzelware mittels des Sensors ist ausreichend, um die Vollständigkeit eines Auftrags in einer Förderbahn zu erkennen.

Der Sensor kann auch dazu genutzt werden, um der Steuereinheit zu signalisieren, ob die zugeordnete Förderbahn leer oder mit Einzelwaren eines Auftrags bereits belegt ist. Dazu können weitere Sensoren an der Förderbahn angeordnet sein, insbesondere auch im Bereich der Abgabeöffnung. Insbesondere kann dadurch vermieden werden, dass eine Bedienperson am Packplatz die Einzelwaren eines Auftrags unvollständig entnimmt. Wenn die Bedienperson beispielsweise die Förderbahn nach der Entnahme der Einzelwaren freigibt und der Sensor an der Abgabeöffnung noch Einzelwaren erkennt, kann ein entsprechendes Fehlersignal bereitgestellt werden. Dabei kann der Sensor besonders unkompliziert ausgeführt sein, da es auf die eindeutige Erkennung der Einzelware nicht ankommt. Es reicht aus, wenn der Sensor erkennt, dass mindestens eine Einzelware an der Abgabeöffnung angeordnet ist. Der Sensor ist insbesondere mit einer Steuereinheit in bidirektionaler Signalverbindung. Es ist möglich, den Warenfluss der Einzelwaren in der Hängeförderanlage und in der Vorrichtung zu überwachen und zu beeinflussen, also Einzelwaren gezielt an eine bestimmte Förderbahn abzugeben.

Ein Verfahren gemäß Anspruch 9 weist im Wesentlichen die Vorteile der Vorrichtung selbst auf, worauf hiermit verwiesen wird. Dadurch, dass Einzelwaren eines Folgeauftrags, also eines zweiten Auftrags, in einem Parkbereich geparkt, also zwischengelagert, werden können, während die Einzelwaren des vorherigen Auftrags noch gepackt werden, wird die Flexibilität bei der Förderung von Einzelwaren erhöht und das Risiko eines Vermischens von Einzelwaren verschiedener Aufträge am Packplatz verhindert. Es ist insbesondere möglich, Aufträge höherer Priorität zuerst zu packen, obwohl sie nach anderen Aufträgen am Packplatz angekommen sind. Die Priorisierung von Aufträgen ist insbesondere unabhängig von der Sequenz der Einzelwaren bzw. der Transporttaschen. Insbesondere bei großen Packbereichen mit vielen Förderbahnen ist eine derartige Ausführung vorteilhaft.

Ein Verfahren gemäß Anspruch 10 ermöglicht eine vereinfachte Ausführung der Vorrichtung. Dadurch, dass die Einzelwaren auftragsorientiert zugeführt werden, ist eine Sortierung innerhalb der Vorrichtung entbehrlich.

Eine Sortiereinheit gemäß Anspruch 11 vereinfacht die auftragsorientierte Zuführung der Einzelwaren zur Vorrichtung.

Ein gezieltes Abgeben der Einzelwaren gemäß Anspruch 12 ermöglicht die sogenannte Zielstellensortierung. Die Funktionsdichte der Vorrichtung ist erhöht. Das Verfahren weist eine erhöhte Flexibilität auf.

Sowohl die in den Patentansprüchen angegebenen Merkmale als auch die in den nachfolgenden Ausführungsbeispielen einer erfindungsgemäßen Vorrichtung angegebenen Merkmale sind jeweils für sich alleine oder in Kombination miteinander geeignet, den erfindungsgemäßen Gegenstand weiterzubilden. Die jeweiligen Merkmalskombinationen stellen hinsichtlich der Weiterbildung des Erfindungsgegenstands keine Einschränkung dar, sondern weisen im Wesentlichen lediglich beispielshaften Charakter auf.

Weitere Merkmale, Vorteile und Einzelheiten der Erfindung ergeben sich aus der nachfolgenden Beschreibung von Ausführungsbeispielen anhand der Zeichnung. Es zeigen:
- Fig. 1: eine schematische Ansicht einer Hängeförderanlage,
- Fig. 2: eine schematische Darstellung einer Vorrichtung gemäß einem ersten Ausführungsbeispiel für eine Hängeförderanlage,
- Fig. 3: eine Fig. 2 entsprechende Darstellung der Vorrichtung in einer geänderten Arbeitsanordnung,
- Fig. 4: eine Darstellung einer Vorrichtung gemäß einem zweiten Ausführungsbeispiel,
- Fig. 5: eine Ansicht eines Ausschnitts einer Hängeförderanlage mit einer Vorrichtung gemäß einem dritten Ausführungsbeispiel.

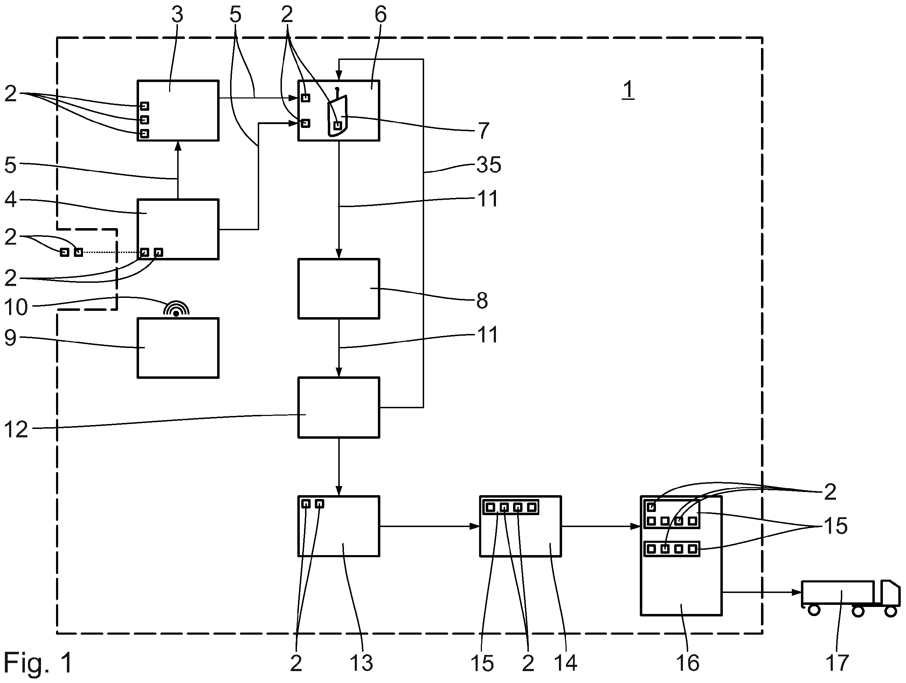

Eine in Fig. 1 als Ganzes mit 1 gekennzeichnete Anlage dient zum Fördern und/oder Transportieren von Einzelwaren 2. Die Anlage 1 umfasst ein Warenlager 3, in dem die Einzelwaren 2 eingelagert sind. Das Warenlager 3 kann als manuelles Lager oder als automatisches Lager ausgeführt sein. Die Anlage 1 weist ferner einen Wareneingang 4 auf, über den Einzelwaren 2 der Anlage 1, insbesondere von extern, zugeführt werden. Dem Wareneingang 4 können auch Retourenwaren zugeführt werden.

Der Wareneingang 4 ist mittels einer Fördertechnik 5 mit dem Warenlager 3 verbunden. Die Fördertechnik 5 ist beispielsweise ein Förderband oder eine manuelle Zubringung der Einzelwaren 2, die insbesondere auch in Gebinden im Wareneingang 4 vorliegen können, zu dem Warenlager 3.

Die Anlage 1 umfasst ferner eine Aufgabestation 6, an der die Einzelwaren in eine Tragevorrichtung 7, die als Transporttasche ausgeführt ist, aufgegeben werden. Die Aufgabestation 6 ist sowohl mit dem Wareneingang 4 als auch mit dem Warenlager 3 jeweils unabhängig mit einer Fördertechnik 5 verbunden. Mittels der Fördertechnik 5 werden die Einzelwaren 2 von dem Warenlager 3 und/oder dem Wareneingang 4 zur Aufgabestation gefördert.

Es ist auch eine Ausführung der Anlage 1 ohne Fördertechnik zwischen der Aufgabestation 6 und dem Wareneingang 4 bzw. dem Warenlager 3 möglich. In diesem Fall werden die Einzelwaren 2 von dem Wareneingang 4 und/oder dem Warenlager 3 manuell zu der Aufgabestation 6, insbesondere mittels Federbodenwagen oder Palettenhubwagen gefördert.

Die Tragevorrichtungen 7 können jeweils vereinzelt mittels eines Rolladapters in einem Schienensystem geführt transportiert werden. Die Tragevorrichtungen 7 werden hängend gefördert. Die Anlage 1 ist eine Hängeförderanlage. Vorteilhaft ist es, wenn die Tragevorrichtungen 7 jeweils mittels einer Identifikationseinrichtung eindeutig identifizierbar sind. Dazu kann jeweils der Rolladapter einen integrierten RFID-Chip aufweisen, auf dem Identifikationsdaten gespeichert sind. Die Identifikationsdaten können mit geeigneten Leseeinrichtungen, die insbesondere entlang des Transportweges der Hängeförderanlage 1 angeordnet sind, erfasst werden, um den Förderweg der Tragevorrichtungen 7 entlang der Hängeförderanlage 1 nachzuverfolgen und zu steuern.

Zur hängenden Förderung in der Hängeförderanlage 1 sind die Tragevorrichtungen 7 jeweils mit einem Rolladapter formschlüssig verbunden. Insbesondere weisen die Tragevorrichtungen 7 jeweils einen Haken auf, der in eine entsprechende Ausnehmung des Rolladapters einhängbar ist. An der Ausnehmung des Rolladapters kann auch ein Kleiderbügel mit einem daran hängenden Kleidungsstück eingehängt werden. Insbesondere dient jede Tragevorrichtung 7 für die Förderung genau einer Einzelware 2.

Details des Rolladapters, dessen Förderung entlang eines Schienensystems und die hängende Förderung einer Tragevorrichtung in Form einer Transporttasche ist in EP 1 690 811 B1 beschrieben, worauf hiermit explizit verwiesen wird.

Alternativ kann auch der Rolladapter hakenförmig ausgeführt sein und in eine Ausnehmung der Tragevorrichtung 7 eingehängt werden.

Die Hängeförderanlage 1 umfasst eine Sortiereinheit 8, die zum Sortieren der Tragevorrichtungen 7, also zum Verändern der Reihenfolge der Einzelwaren im Warenstrom, dient. Die Sortiereinheit 8 kann verschiedentlich ausgeführt sein. Die Sortiereinheit 8 kann mehrere parallel und/oder in Reihe angeordnete Staustrecken und/oder einen oder mehrere Umlaufkreisel aufweisen. Zusätzlich oder alternativ kann die Sortiereinheit 8 als Matrixsorter ausgeführt sein.

Die Sortiereinheit 8 dient insbesondere zum Zusammenstellen der Einzelwaren 2 zu logischen Gruppen. Insbesondere werden die Einzelwaren 2 zu Gruppen von Einzelwaren 2 zusammengefasst, die einen Auftrag 15 bilden. In der Sortiereinheit 8 können auch Gruppen von Einzelwaren 2 gebildet werden, die Teil eines Auftrags 15 sind.

Die Hängeförderanlage 1 umfasst eine zentrale Steuereinheit 9, die signaltechnisch insbesondere mit den Leseeinrichtungen entlang der Hängeförderanlage 1 in Signalverbindung steht. Die Signalverbindung kann kabelgebunden oder kabellos erfolgen. Eine kabellose, funkgebundene Signalverbindung ist in Fig. 1 mit einem Symbol 10 zur Funkübertragung dargestellt.

Die Hängeförderanlage 1 umfasst ein Schienensystem 11, mittels dem die Tragevorrichtungen 7 von der Aufgabestation 6 zu der Sortiereinheit 8 und durch die Sortiereinheit 8 gefördert werden. Das Schienensystem 11 dient auch zur fördertechnischen Verbindung der Sortiereinheit 8 mit mindestens einer Entladestation 12.

Insbesondere sind mehrere Entladestationen 12 vorgesehen. An der Entladestation 12 werden die Tragevorrichtungen 7 automatisch geöffnet und entladen, insbesondere indem die Einzelware 2 aus der geöffneten Tragevorrichtung 7 schwerkraftbedingt nach unten herausfällt. Zum automatischen Öffnen der Tragevorrichtungen 7 in der Entladestation 12 dient eine nicht näher dargestellte Öffnungseinheit.

Die an der Entladestation 12 entladenen Einzelwaren 2 werden an eine als Ganzes mit 13 bezeichnete Vorrichtung zum auftragsorientierten Bereitstellen der Einzelwaren 2 mehrerer Aufträge abgegeben. Die Vorrichtung 13 ist benachbart zu der Entladestation 12 und einem Packbereich mit mindestens einem Packplatz 14 angeordnet. Insbesondere dient die Vorrichtung 13 zur Förderung und Bereitstellung der Einzelwaren 2 von der Entladestation 12 zu dem Packplatz 14.

Mindestens eine der Entladestationen 12 ist dem Packbereich fest zugeordnet. Der Packbereich weist mindestens einen Packplatz 14 auf. Insbesondere sind mehrere Packplätze 14 im Packbereich vorgesehen. Die Anzahl der Entladestationen 12 pro Packplatz 14 beträgt mindestens eins. Es können auch mehrere Entladestationen 12 einem Packplatz 14 zugeordnet sein.

Es ist insbesondere auch eine Ausführung ohne feste Zuweisung der Entladestation denkbar, woraus sich eine flexible Anzahl von Bedienpersonen pro Packbereich ermöglichen lässt. Die Anpassungsfähigkeit an die individuell unterschiedlichen Durchsatzleistungen einzelner Bedienpersonen ist erhöht. Die Anpassungsfähigkeit an das Auftragsprofil, insbesondere an die Dauer des Packvorgangs verändernde Eigenschaften wie Auftragsgröße und Value-Added-Service ist verbessert.

Die in der Entladestation 12 entleerten Tragevorrichtungen 7 werden über eine Rückführstrecke 35 der Hängeförderanlage 1 zurückgeführt, mittels einer nicht dargestellten Schließeinheit geschlossen, also in ihren Ursprungszustand zurückversetzt, und beispielsweise an der Aufgabestation 6 als Leertaschen zum Beladen mit Einzelwaren 2 wieder zur Verfügung gestellt.

An dem Packplatz 14 werden die Einzelwaren 2 eines Auftrags 15 zusammengefasst und verpackt. Der Packplatz 14 ist mit einem Warenausgang 16 fördertechnisch verbunden. Über den Warenausgang 16 können die Aufträge 15 mit den Einzelwaren 2 die Anlage 1 verlassen. Die in der Anlage 1 abgearbeiteten Aufträge 15 können unterschiedliche Artikel und unterschiedliche Anzahlen der Artikel aufweisen. Es ist auch denkbar, dass ein Auftrag 15 nur eine einzige Einzelware 2 aufweist. Aufträge 15 aus dem Warenausgang 16 können mittels externer Transportmittel 17 wie beispielsweise Lastkraftwagen, abtransportiert werden.

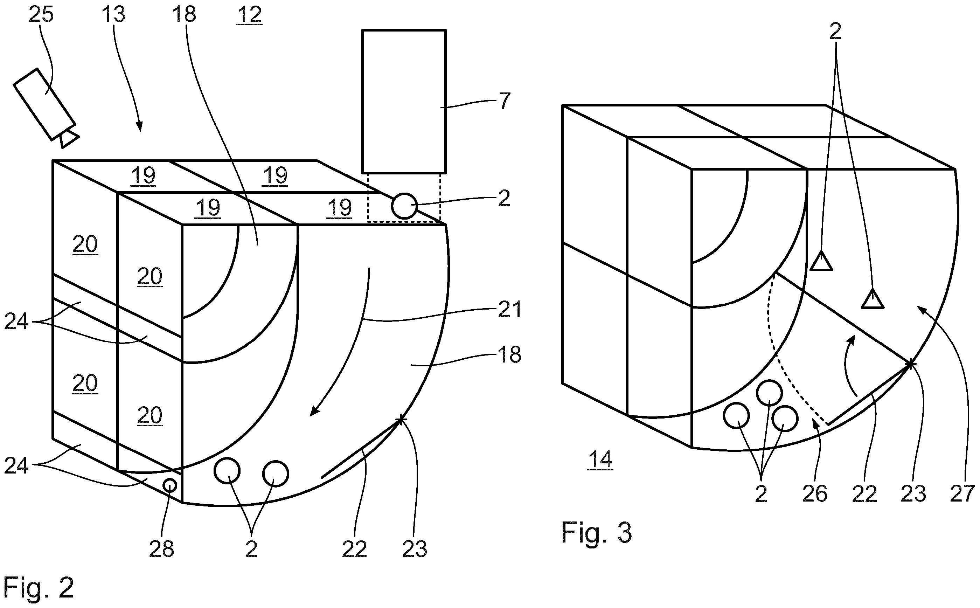

Nachfolgend wird anhand der Fig. 2 und 3 eine Vorrichtung 13 gemäß einem ersten Ausführungsbeispiel näher erläutert.

Die Vorrichtung 13 umfasst vier Förderbahnen 18. Die Förderbahnen 18 sind jeweils als 90°-Bögen in Form eines Förderschachtes im Wesentlichen identisch ausgeführt. Jede Förderbahn 18 weist eine oben angeordnete Zuführöffnung 19 und eine in Fig. 2 jeweils links dargestellte Abgabeöffnung 20 auf. An der jeweiligen Zuführöffnung können Einzelwaren 2 aus der Tragevorrichtung 7 entladen und in die Vorrichtung 13 abgegeben werden. Die jeweiligen Abgabeöffnungen 20 der Förderbahnen 18 sind jeweils mit der zugehörigen Zuführöffnung 19 fördertechnisch verbunden. Die Einzelwaren 2, die der Vorrichtung 13 an der Zuführöffnung 19 zugeführt werden, werden zu der Abgabeöffnung 20 hin gefördert. Gemäß dem gezeigten Ausführungsbeispiel erfolgt die Förderung der Einzelwaren 2 entlang der Vorrichtung 13 selbsttätig, also schwerkraftbedingt. Entlang der Förderbahn 18 ist von der Zuführöffnung 19 zu der Abgabeöffnung 20 eine Förderrichtung 21 vorgegeben.

Entlang der Förderrichtung 21 ist zwischen der Zuführöffnung 19 und der Abgabeöffnung 20 jeweils ein betätigbares Trennelement 22 angeordnet. Aus Darstellungsgründen ist lediglich das Trennelement 22 für die Förderbahn 18 gezeigt, die in Fig. 2 und 3 jeweils unten rechts dargestellt ist. Die weiteren Förderbahnen 18 der Vorrichtung 13 weisen entsprechende Trennelemente 22 auf. Gemäß dem gezeigten Ausführungsbeispiel ist das Trennelement 22 eine Schwenkklappe, die in Fig. 2 in der geöffneten Position angeordnet ist. Das Trennelement 22 ist um eine Trennelement-Schwenkachse 23 an der Förderbahn 18 schwenkbar angelenkt. Das Trennelement 22 kann zwischen der geöffneten Position in Fig. 2 und der geschlossenen Position in Fig. 3 geschwenkt werden.

Die Förderbahnen 18 sind gemäß Fig. 2 in einem 2x2-Raster matrixartig angeordnet. Entsprechend sind die Zuführöffnungen 19 und die Abgabeöffnungen 20 jeweils in einem 2x2-Raster angeordnet, also in zwei Zeilen und zwei Spalten. Wenn mehrere Förderbahnen 18 vorgesehen sind, ist eine beliebige Anordnung der Förderbahnen 18 denkbar, beispielsweise in einer einzigen Zeile oder in einem beliebigen nxm-Raster. Die Zuführöffnungen 19 sind gemäß dem gezeigten Ausführungsbeispiel horizontal, also in einer Horizontalebene, orientiert. Es ist auch denkbar, dass die Zuführöffnungen 19 mit einem Zuführ-Neigungswinkel gegenüber der Horizontalebene angeordnet sein können, wobei der Zuführ-Neigungswinkel höchstens 45°, insbesondere höchstens 30°, insbesondere höchstens 15° und insbesondere höchstens 5° beträgt.

Die Abgabeöffnungen 20 sind gemäß dem gezeigten Ausführungsbeispiel vertikal, also in einer Vertikalebene, orientiert. Die Abgabeöffnungen können auch mit einem Abgabe-Neigungswinkel gegenüber der Vertikalebene angeordnet sein, wobei der Abgabe-Neigungswinkel höchstens 45°, insbesondere höchstens 30°, insbesondere höchstens 15°, insbesondere höchstens 5° beträgt.

An den Abgabeöffnungen 20 ist jeweils ein Stoppelement 24 in Form einer Halteleiste ausgeführt. Das Stoppelement 24 verhindert, dass die entlang der Förderbahn 18 geförderten Einzelwaren 22 unbeabsichtigt aus der Förderbahn 18 austreten. Die Stoppelemente 24 gewährleisten, dass die Einzelwaren 2 definiert an der Abgabeöffnung 20 bereitgestellt werden. Anstelle der Halteleisten 24 kann zusätzlich oder alternativ an der Abgabeöffnung 20 eine Schwenkklappe oder eine Schiebeklappe angeordnet sein, die die Abgabeöffnung 20 verschließt.

Es ist auch denkbar, ein Schließelement an den Zuführöffnungen 19 jeweils vorzusehen, um zu verhindern, dass unbeabsichtigt Gegenstände, insbesondere Einzelwaren 2, in die jeweilige Förderbahn 18 gelangen. Das Risiko einer Fehl-Kommissionierung ist dadurch verhindert. Rein schematisch ist in Fig. 2 ein Sensor 25 dargestellt, der zum Erfassen der an die Förderbahn 18 abgegebenen Einzelwaren 2 dient. Insbesondere ist jeder Förderbahn 18 ein Sensor 25 zugeordnet. Der Sensor 25 ist insbesondere mit der zentralen Steuereinheit 9 in Signalverbindung. Der Sensor 25 kann ein Stellsignal bereitstellen, wenn sämtliche Einzelwaren 2 eines Auftrags in die Förderbahn 18 abgegeben worden sind.

In der geschlossenen Position des Trennelements 22 ist eine Förderung von Einzelwaren 2 zu der Abgabeöffnung 20 verhindert. Das Trennelement 22 trennt die Förderbahn 18 in einen der Abgabeöffnung 20 zugewandten Abgabebereich 26 und einen zwischen der Zuführöffnung 19 und dem Trennelement 22 angeordneten Parkbereich 27. In dem Abgabebereich 26 werden die Einzelwaren 2 zur Abgabe bereitgestellt. In dem Parkbereich 27 werden Einzelwaren 2, insbesondere eines nachfolgenden Auftrags 15 geparkt. Durch das Trennelement 22 ist ausgeschlossen, dass die Einzelwaren 2 verschiedener Aufträge 15 in der Vorrichtung 13 miteinander vermischt werden.

Gemäß dem gezeigten Ausführungsbeispiel ist der Parkbereich 27 in die Förderbahn integriert.

Im Bereich der Abgabeöffnung 20 ist gemäß dem gezeigten Ausführungsbeispiel an dem Stoppelement 24 ein Signalelement in Form eines Anzeigeelements 28 als Signalleuchte vorgesehen. Das Anzeigeelement 28 dient zum Anzeigen, dass an der Abgabeöffnung 20 die Einzelwaren 2 eines vollständigen Auftrags 15 bereitgestellt sind. Das Anzeigeelement 28 kann zusätzlich oder alternativ als akustische Anzeige beispielsweise in Form eines Signaltons ausgeführt sein. Es ist auch denkbar, eine Anzeigeeinheit in Form eines Bildschirms zu verwenden, der anzeigt, welche der Abgabeöffnungen 20 als nächstes zu bedienen ist.

Nachfolgend wird anhand der Fig. 2, 3 die Funktionsweise der Vorrichtung 13 näher erläutert. Die Tragevorrichtungen 7 mit Einzelwaren 2 werden entlang der Hängeförderanlage 1 zu der Entladestation 12 gefördert und dort automatisch geöffnet. Die Einzelwaren 2 fallen schwerkraftbedingt nach unten aus der Tragevorrichtung 7 heraus und werden in die Zuführöffnung 19 einer Förderbahn 18 abgegeben. Die Einzelwaren 2 werden schwerkraftbedingt in der Förderbahn 18 entlang der Förderrichtung 21 zu der Abgabeöffnung 20 gefördert und am Stoppelement 24 gestoppt. Die Abgabe der Einzelwaren 2 in die Förderbahn 18 wird mittels des Sensors 25 überwacht. Sobald alle Einzelwaren 2 des Auftrags 15 in die Förderbahn 18 abgegeben sind, wird von der Steuerungseinheit 9 ein Stellsignal an das Trennelement 22 übermittelt, sodass sich das Trennelement 22 von der in Fig. 2 gezeigten geöffneten Position in die in Fig. 3 gezeigte geschlossene Position schwenkt. Die Einzelwaren 2 des ersten Auftrags 15 sind in dem Abgabebereich 26 angeordnet und stehen dort zur Entnahme am Packplatz 14 bereit.

Weitere Einzelwaren 2 eines zweiten Auftrags 15 können bereits in die Förderbahn 18 abgegeben werden, auch wenn die Einzelwaren 2 des ersten Auftrags 15 an der Abgabeöffnung 20 noch nicht oder noch nicht vollständig entnommen worden sind. Die Einzelwaren 2 des zweiten Auftrags 15 werden in dem Parkbereich 27 geparkt, also zwischengespeichert. Wenn die Einzelwaren 2 des ersten Auftrags 15 am Packplatz 14 entnommen und verpackt worden sind, gibt die Steuerungseinheit 9 ein Freigabesignal an das Trennelement 22, das dann in die in Fig. 2 dargestellte geöffnete Position zurückschwenkt, sodass die Einzelwaren 2 des zweiten Auftrags 15 zu der Abgabeöffnung 20 gefördert werden. Zur Unterscheidung sind die Einzelwaren 2 des ersten Auftrags 15 als Kreise und die Einzelwaren 2 des zweiten Auftrags 15 als Dreiecke symbolisiert.

Die Vorrichtung 13 ermöglicht eine auftragsorientierte Bereitstellung der Einzelwaren 2. Die Einzelwaren 2 werden gemäß dem gezeigten Ausführungsbeispiel an der Entladestation 12 auftragsorientiert entladen und der Vorrichtung 13 zugeführt. Das bedeutet, dass zunächst alle Einzelwaren 2 des ersten Auftrags 15 in die Vorrichtung 13 abgegeben werden, bevor die nächsten Einzelwaren 2 des nachfolgenden Auftrags 15 abgegeben werden.

In einer weiteren, nicht dargestellten Ausführung kann die Förderbahn 18 auch als wendelförmige Rutsche ausgeführt sein.

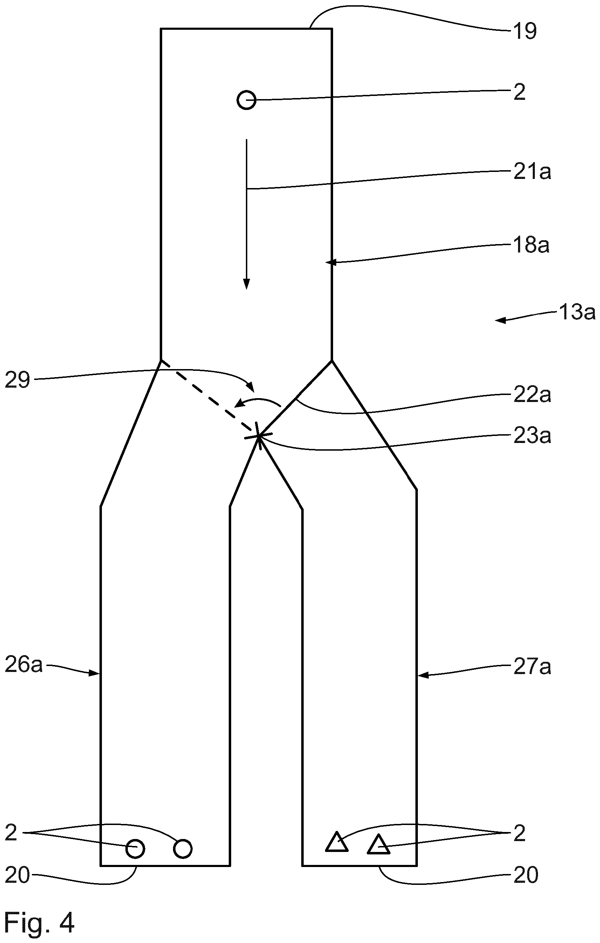

Nachfolgend wird unter Bezugnahme auf Fig. 4 ein zweites Ausführungsbeispiel einer Vorrichtung beschrieben. Konstruktiv identische Teile erhalten dieselben Bezugszeichen wie beim ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten a.

Bei der Vorrichtung 13a ist die Förderbahn 18a im Wesentlichen Y-förmig ausgeführt mit einer Zuführöffnung 19 und zwei Abgabeöffnungen 20. Die Förderbahn 18a weist einen Weichenbereich 29 auf. In dem Weichenbereich 29 ist das Trennelement 22a angeordnet. Das Trennelement 22a ist als Weichenzunge ausgeführt, die zwischen zwei Endlagen um die Schwenkachse 23a schwenkbar angeordnet ist. In der in Fig. 4 gezeigten Anordnung des Trennelements 22a werden die Einzelwaren 2 in den linken Ast der Förderbahn 18a zu der links dargestellten Abgabeöffnung 20 gefördert. In der entsprechend anderen Anordnung des Trennelements 22a, die in Fig. 4 gestrichelt angedeutet ist, werden die Einzelwaren 2 in den rechten Ast der Förderbahn 18a zu der rechts dargestellten Abgabeöffnung 20 gefördert. In der in Fig. 4 gezeigten Anordnung stellt der rechte Ast der Förderbahn 18a der durch das Trennelement 22a von der Zuführöffnung 19 getrennt ist, den Parkbereich 27a dar. Der von dem Trennelement 22a freigegebene Ast der Förderbahn 18a bildet den Abgabebereich 26a.

Die Vorrichtung 13a gemäß Fig. 4 kann so angeordnet sein, dass die Förderrichtung 21 im Wesentlichen vertikal orientiert ist, also sowohl die Zuführöffnung 19 als auch die Abgabeöffnungen 20 jeweils in einer Horizontalebene angeordnet sind.

Alternativ ist es auch möglich, dass die Förderrichtung 21a horizontal orientiert ist. Entsprechend sind die Zuführöffnung 19 und die Abgabeöffnungen 20 in einer Vertikalebene orientiert. In diesem Fall kann die Förderbahn beispielsweise durch ein angetriebenes Gurtband ausgeführt sein, auf dem die Einzelwaren 2 aufgelegt und durch das Gurtband gefördert werden.

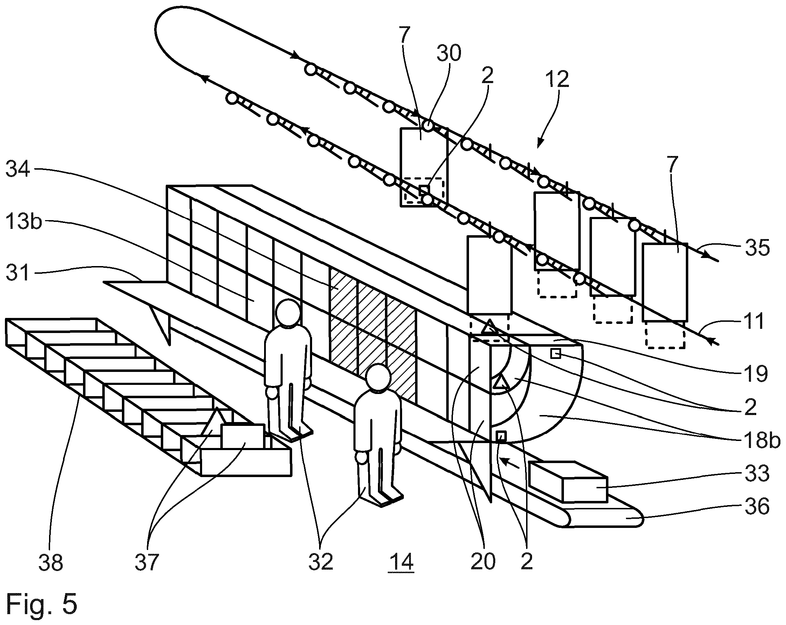

Im Folgenden wird unter Bezugnahme auf Fig. 5 ein drittes Ausführungsbeispiel der Erfindung beschrieben. Konstruktiv identische Teile erhalten dieselben Bezugszeichen wie beim ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten b.

Der wesentliche Unterschied gegenüber dem ersten Ausführungsbeispiel besteht darin, dass jede Vorrichtung 13b zwei Förderbahnen 18b umfasst, wobei die Einzelwaren 2 unterschiedlicher Aufträge 15 in die erste Förderbahn bzw. die zweite Förderbahn 18b abgegeben werden. Dadurch bildet die eine Förderbahn 18b, an der die Einzelwaren 2 abgegeben werden den Abgabebereich 28b und die andere Förderbahn 18b, an der die Einzelwaren 2 zwischengepuffert, also geparkt werden, bei denen Abgabe zu einem späteren Zeitpunkt erfolgt, den Parkbereich 27b. Ein Trennelement ist bei diesem Ausführungsbeispiel entbehrlich. An der Entladestation 12 ist eine Hängefördertechnik vorgesehen mit einem Schienensystem 11, entlang dem Transporttaschen 7 an Rolladaptern 30 hängend gefördert werden. Die Entladestation 12 ist derart angeordnet, dass die Transporttaschen 7 oberhalb der Zuführöffnungen 19 der Förderbahnen 18b entlang geführt werden. Durch das automatische Öffnen der Transporttaschen 7 können die Einzelwaren 2 in die dafür vorgesehenen Zuführöffnungen 19 fallen. Das Entladen der Einzelwaren 2 aus den Transporttaschen 7 erfolgt insbesondere während des Transports der Transporttaschen 7. Insbesondere ist nicht vorgesehen, dass die Transporttaschen 7 zum Entladen der Einzelwaren 2 gestoppt werden. Die Vorrichtung 13b wird auch als Packwall bezeichnet.

Die Packwall wird typischerweise von mehreren Bedienpersonen 32 bedient, wobei jede Bedienperson 32 einen fest zugeordneten Arbeitsbereich 34 hat. Der Arbeitsbereich 34 ist für jede Bedienperson 32 insbesondere durch eine feste Zuordnung von Abgabeöffnungen 20 definiert. Ein typischer Arbeitsbereich 34 kann beispielsweise sechs Abgabeöffnungen 20 umfassen, die in Fig. 5 grau eingefärbt dargestellt sind.

Es ist auch denkbar, dass der jeweilige Arbeitsbereich flexibel definiert ist. Eine flexible Definition des jeweiligen Arbeitsbereichs ist insbesondere in Abhängigkeit der individuellen Packleistung der Bedienperson 32 und/oder anderer, insbesondere einzelwarenabhängiger Unterscheidungskriterien möglich. Derartige Kriterien sind beispielsweise Warenwert, Paketdienstleister, Auftragsgröße und/oder Versandbehältnis.

Die jeweiligen Förderbahnen 18b bilden sogenannte Zielstellen. Durch das gezielte Abgeben der Einzelwaren 2 in die Förderbahnen 18b kann eine sogenannte Zielstellen-Sortierung erfolgen. Es ist insbesondere nicht erforderlich, dass die Einzelwaren 2 zu den Vorrichtungen 13b auftragsorientiert transportiert werden. Die Einzelwaren 2 können insbesondere vollkommen unsortiert zu der Entladestation 12 transportiert werden.

Die Vorrichtung 13b weist eine Vielzahl an Förderbahnen 18b auf, die zweireihig derart angeordnet sind, dass jeweils zwei Abgabeöffnungen 20 übereinander angeordnet sind. Im Bereich der Abgabeöffnungen 20 ist am Packplatz ein Packtisch 31 vorgesehen, der es Bedienpersonen 32 erleichtert, die aus der Abgabeöffnung 20 entnommenen Einzelwaren 2 in einen Versandbehälter 33 in Form eines Versandkartons zu packen.

Die entladenen, geleerten Transporttaschen 7 werden über die Rückführbahn 35 wieder zurückgeführt. Der fertig gepackte Versandbehälter 33 kann mittels einer Transportinfrastruktur 36 zum Warenausgang 16 transportiert werden. Anstelle der Transportinfrastruktur 36, die als automatisches Gurtband ausgeführt ist, kann auch ein manueller Abtransport zum Warenausgang 16 vorgesehen sein.

Bei der Packwall 13b werden die Einzelwaren 2 in den Förderbahnen 18b, die als Zielstellen fungieren, gesammelt. Die Zielstelle ist stationär ausgebildet. Um eine zuverlässige Zuführung der Einzelwaren 2 aus den Transporttaschen 7 in die Förderbahnen 18 zu gewährleisten, können Rutschbahnen und/oder Wendelbahnen genutzt werden.

Sobald in einer Förderbahn 18b sämtliche Einzelwaren 2 eines Auftrags 15 vorliegen oder bei geteilten Aufträgen ein Teilauftrag vorliegt, wird mittels des Anzeigeelements 28 dies der Bedienperson 32 signalisiert. Die Teilung eines Auftrags kann aufgrund des Gesamtvolumens des Auftrags, also der Anzahl der Einzelteile, erfolgen und/oder auf anderen Kriterien wie beispielsweise der Zerbrechlichkeit einer Einzelware beruhen. Eine Aufteilung der Einzelwaren eines Auftrags 15 auf mehrere Förderbahnen 18b, also Zielstellen, ist vorteilhaft, um Schäden an den Einzelteilen zu vermeiden. Insbesondere ist der Staudruck innerhalb einer Förderbahn reduziert. Die Bedienperson 32 kann die Einzelwaren 2 des Auftrags 15 über die Abgabeöffnung 20 entnehmen und am Packtisch 31 packen und zu dem gepackten Auftrag 15 umwandeln. Die Förderbahnen 18b gemäß der Packwall können auch zusätzlich mit einem Trennelement wie für das erste Ausführungsbeispiel erläutert, ausgestattet sein.

Am Packplatz 14 können zusätzlich nicht-taschenfähige Einzelwaren 37 mittels einer Zusatz-Infrastruktur 38 bereitgestellt werden. Dadurch ist die Funktionalität der Hängeförderanlage 1 erweitert, da die Aufträge 15 auch nicht-taschenfähige Einzelwaren 37 umfassen können.

Die wesentlichen Vorteile der erfindungsgemäßen Vorrichtung bestehen darin, dass der Aufwand für die Hängefördertechnik der Hängeförderanlage 1 reduziert ist. Der Platzbedarf am Packplatz 14 ist reduziert. Die Bereitstellung nicht-taschenfähiger Einzelwaren 37 ist wegen des reduzierten Platzbedarfs vereinfacht. Es ist insbesondere denkbar, dass die nicht-taschenfähigen Einzelwaren 37 in einer separaten, dafür konzipierten Packwall bereitgestellt werden. Die Reihenfolge der beiden Materialflüsse von taschenfähigen und nicht-taschenfähigen Einzelwaren müssen nicht aufeinander abgestimmt werden. Die Bereitstellung der Waren am Packplatz 14 kann flexibel und unabhängig erfolgen.

Es ergibt sich eine flexible Gestaltung der Anzahl der Bedienpersonen 32. Es ergibt sich eine flexible Gestaltung der Arbeitsbereiche 34 an der Packwall 13b.

Der Höhenbedarf am Packplatz 14 ist reduziert. Dadurch, dass die Hängefördertechnik im Bereich des Packplatzes 14 sehr kompakt ausgeführt sein kann, ist deren Anbindung an andere Transportinfrastrukturen, insbesondere die Transportinfrastruktur 36 zum Abtransport fertig gepackter Aufträge 15 und die Zusatz-Infrastruktur 38 für das Bereitstellen nicht-taschenfähiger Einzelwaren 37 vereinfacht.

Es ergibt sich eine flexible Gestaltung hinsichtlich der Anzahl der Packplätze 14.

Die Förderkapazität der Hängefördertechnik kann optimal ausgenutzt werden. Die erfindungsgemäße Vorrichtung ist geeignet, mehr als 250 Einzelwaren 2 pro Stunde, insbesondere mehr als 500, insbesondere mehr als 1000, insbesondere mehr als 2000, insbesondere mehr als 2500 und insbesondere mehr als 3000 Tragevorrichtungen 7 pro Stunde im Entladebereich 12 zu entladen und die Einzelwaren 2 an den Abgabeöffnungen 20 bereitzustellen, die von den Bedienpersonen 32 zu Aufträgen 15 gepackt werden.

Das Verpackungsmaterial kann besser zugänglich am Packplatz 14 bereitgestellt werden. Die Vorrichtung 13b ist mit anderen Technologien, insbesondere beim Packen der Einzelwaren kombinierbar, insbesondere Pick-By-Light, Pick-By-Voice und Pick-By-Vision.

## Patentansprüche

1. Hängeförderanlage (1) umfassend
- einen Packplatz (14), an dem auftragsorientiert bereitgestellte Einzelwaren (2) gepackt werden, und
- eine Vorrichtung (13; 13a; 13b), die aufweist
a. eine Fördervorrichtung (11, 30) zum hängenden Fördern der Einzelwaren (2),
b. eine Entladestation (12) zum Entladen der Einzelwaren (2),
c. eine Förderbahn (18; 18a; 18b)
i. mit einer Zuführöffnung (19), über die die an der Entladestation (12) entladenen Einzelwaren (2) der Förderbahn (18; 18a; 18b) zuführbar sind, wobei die Zuführöffnung (19) mit einem Zuführ-Neigungswinkel gegenüber einer Horizontalebene von höchstens 45° angeordnet ist,
ii. mit einer mit der Zuführöffnung (19) fördertechnisch verbundenen Abgabeöffnung (20), wobei die Abgabeöffnung (20) mit einem Abgabe-Neigungswinkel gegenüber einer Vertikalebene von höchstens 45° angeordnet ist,
iii. mit einer von der Förderbahn (18; 18a; 18b) vorgegebenen Förderrichtung (21), die von der Zuführöffnung (19) zu der Abgabeöffnung (20) orientiert ist,
d. einen Parkbereich (27; 27a; 27b) zum Parken von Einzelwaren (2) eines zweiten Auftrags (15), wobei
- mittels der Vorrichtung (13; 13a; 13b) die Einzelwaren (2) mehrerer Aufträge (15) auftragsorientiert an dem Packplatz (14) bereitgestellt werden,
- an der Abgabeöffnung (20) Einzelwaren (2) eines ersten Auftrags (15) am Packplatz (14) bereitstellbar sind,
- der Parkbereich (27; 27a; 27b) am Packplatz (14) angeordnet ist,
**dadurch gekennzeichnet, dass**
- ein Signalelement (28) vorhanden ist zum Signalisieren, dass an der Abgabeöffnung (20) die Einzelwaren (2) eines vollständigen Auftrags (15) bereitgestellt sind,
- an der Abgabeöffnung (20) ein Stoppelement (24) zum Stoppen der Förderung der Einzelwaren (2) angeordnet ist.

2. Hängeförderanlage (1) gemäß Anspruch 1, **dadurch gekennzeichnet, dass** der Parkbereich (27; 27a; 27b) in einer zweiten Förderbahn (18b) angeordnet ist, die mit einer zweiten Zuführöffnung (19) zum Zuführen der Einzelwaren (2) des zweiten Auftrags (15) und mit einer mit der zweiten Zuführöffnung (19) fördertechnisch verbundenen zweiten Abgabeöffnung (20) zum Bereitstellen der Einzelwaren (2) des zweiten Auftrags am Packplatz (14) ausgeführt ist.

3. Hängeförderanlage (1) gemäß einem der vorstehenden Ansprüche,
**dadurch gekennzeichnet, dass** entlang der Förderbahn (18; 18a; 18b) ein Trennelement (22; 22a) zum Trennen der Einzelwaren (2) verschiedener Aufträge (15) angeordnet ist.

4. Hängeförderanlage (1) gemäß einem der vorstehenden Ansprüche, **gekennzeichnet durch** mehrere Förderbahnen (18; 18b), die insbesondere jeweils eine Zuführöffnung (19) und eine Abgabeöffnungen (20) aufweisen, wobei die Zuführöffnungen (19) und/oder die Abgabeöffnungen (20) matrixartig, insbesondere in Zeilen und Spalten, angeordnet sind.

5. Hängeförderanlage (1) gemäß einem der vorstehenden Ansprüche,
**dadurch gekennzeichnet, dass** die Zuführöffnung (19) mit einem Zuführ-Neigungswinkel gegenüber einer Horizontalebene von höchstens 30°, insbesondere höchstens 15°, insbesondere höchstens 5° angeordnet ist und insbesondere horizontal orientiert ist.

6. Hängeförderanlage (1) gemäß einem der vorstehenden Ansprüche,
**dadurch gekennzeichnet, dass** die Abgabeöffnung (20) mit einem Abgabe-Neigungswinkel gegenüber einer Vertikalebene von höchstens 30°, insbesondere höchstens 15°, insbesondere höchstens 5° angeordnet ist und insbesondere vertikal orientiert ist.

7. Hängeförderanlage (1) gemäß einem der vorstehenden Ansprüche,
**dadurch gekennzeichnet, dass** die Förderbahn (18; 18a; 18b) zumindest abschnittsweise gegenüber der Horizontalen geneigt ausgeführt ist.

8. Hängeförderanlage (1) gemäß einem der vorstehenden Ansprüche, **gekennzeichnet durch** einen Sensor (25) zum Erfassen der an die Förderbahn (18; 18a; 18b) abgegebenen Einzelwaren (2).

9. Verfahren zum auftragsorientierten Bereitstellen von Einzelwaren (2) mehrerer Aufträge (15) an einem Packplatz (14) einer Hängeförderanlage (1) nach einem der vorhergehenden Ansprüche mit den Verfahrensschritten
- Hängefördern der Einzelwaren (2) mittels einer Fördervorrichtung (11, 30) zu einer Entladestation (12),
- Entladen der Einzelwaren (2) an der Entladestation (12),
- Zuführen der an der Entladestation (12) entladenen Einzelwaren (2) über eine Zuführöffnung (19) in eine Förderbahn (18; 18a; 18b),
- Fördern der Einzelwaren (2) entlang der Förderbahn (18; 18a; 18b),
- Bereitstellen von Einzelwaren (2) eines ersten Auftrags an einer Abgabeöffnung (20) am Packplatz (14),
- Packen der Einzelwaren (2) des ersten Auftrags am Packplatz (14),
- Abtransportieren des gepackten ersten Auftrags vom Packplatz (14),
- Parken von Einzelwaren (2) eines zweiten Auftrags in einem Parkbereich (27; 27a; 27b),
- Bereitstellen der Einzelwaren (2) des zweiten Auftrags am Packplatz (14) nach dem Abtransportieren des gepackten ersten Auftrags.

10. Verfahren gemäß Anspruch 9, **dadurch gekennzeichnet, dass** die Einzelwaren (2) der Zuführöffnung (19) auftragsorientiert zugeführt werden.

11. Verfahren gemäß Anspruch 9 oder 10, **gekennzeichnet durch** eine auftragsorientierte Vorsortierung in einer Sortiereinheit (8) der Hängeförderanlage (1).

12. Verfahren gemäß einem der Ansprüche 9 bis 11, **gekennzeichnet durch** eine Sortierung der Einzelwaren (2) durch gezieltes Abgeben der Einzelwaren (2) an unterschiedliche Förderbahnen (18; 18b).

## Claims

1. Overhead conveyor installation (1) comprising
- a packing station (14) at which individual products (2) provided in an order related manner are packed, and
- an apparatus (13; 13a; 13b) having
a. a conveyor system (11, 30) for conveying the individual products (2) in a suspended manner,
b. an unloading station (12) for unloading the individual products (2),
c. a conveyor track (18; 18a; 18b)
i. having a feed opening (19) via which the individual products (2) unloaded at the unloading station (12) can be fed to the conveyor track (18; 18a; 18b), the feed opening (19) being arranged at a feed angle of inclination of at most 45° to a horizontal plane,
ii. having a discharge opening (20) connected to the feed opening (19) in terms of conveying technology , the discharge opening (20) being arranged with a discharging angle of inclination of at most 45° with respect to a vertical plane.
iii. having a conveying direction (21) predetermined by the conveyor track (18; 18a; 18b), which is oriented from the feed opening (19) to the discharge opening (20),
d. a parking area (27; 27a; 27b) for parking individual products (2) of a second order (15),
wherein
- the individual products (2) of a plurality of orders (15) at the packing station (14) are provided in an order-related manner, by means of the apparatus (13; 13a; 13b),
- individual products (2) of a first order (15) are available at the discharge opening (20) at the packing station (14),
- the parking area (27; 27a; 27b) is arranged at the packing station (14),
**characterized in that**
- a signal member (28) is provided to indicate that the individual products (2) of a complete order (15) are available at the discharge opening (20),
- a stop member (24) is arranged at the discharge opening (24) to stop the feeding of the individual products (2).

2. Overhead conveyor installation (1) as claimed in claim 1, **characterized in that** the parking area (27; 27a; 27b) is arranged in a second conveyor track (18), which is provided with a second feed opening (19) for feeding the individual products (2) of the second order (15) and with a second discharge opening (20) connected to the second feed opening (19) in a conveying manner, for providing the individual products (2) of the second order at the packing station (14).

3. Overhead conveyor installation (1) as claimed in any one of the preceding claims, **characterized in that** a separating member (22; 22a) is arranged along the conveyor track (18; 18a; 18b) to separate the individual products (2) of various orders (15).

4. Overhead conveyor installation (1) as claimed in any one of the preceding claims, **characterized by** a plurality of conveyor tracks (18; 18b) each having in particular one feed opening (19) and one discharge opening (20), the feed openings (19) and/or the discharge openings (20) being arranged in the manner of a matrix, in particular in rows and columns.

5. Overhead conveyor installation (1) as claimed in any one of the preceding claims, **characterized in that** the feed opening (19) is arranged at a feed inclination angle of at most 30°, in particular at most 15°, and in particular at most 5° in relation to a horizontal plane, and is in particular oriented horizontally.

6. Overhead conveyor installation (1) as claimed in any one of the preceding claims, **characterized in that** the discharge opening (20) is arranged at a discharge inclination angle of at most 30°, in particular at most 15°, and in particular at most 5° in relation to a vertical plane, and is in particular oriented vertically.

7. Overhead conveyor installation (1) as claimed in any one of the preceding claims, **characterized in that** the conveyor track (18; 18a; 18b) is inclined in relation to the horizontal at least partly.

8. Overhead conveyor installation (1) as claimed in any one of the preceding claims, **characterized by** a sensor (25) to detect the individual products (2) loaded into the conveyor track (18; 18a; 18b).

9. Method for providing individual products (2) of a plurality of orders (15) at a packing station (14) of an overhead conveyor installation in an order-related manner as claimed in any one of the preceding claims, the method comprising the method steps of
- conveying the individual products (2) to an unloading station (12) in a suspended manner by means of a conveyor system (11, 30),
- unloading the individual products (2) at the unloading station (12),
- feeding the individual products (2) unloaded at the loading station (2) to a conveyor track (18; 18a; 18b) via a feed opening (19),
- conveying the individual products (2) along the conveying track (18; 18a; 18b),
- providing individual products (2) of a first order at a discharge opening (20) at the packing station (14),
- packing the individual products (2) of the first order at the packing station (14),
- removing the packed first order from the packing station (14),
- parking individual products (2) of a second order in a parking area (27; 27a; 27b),
- providing the individual products (2) of the second order at the packing station (14) after removing the packed first order.

10. Method as claimed in claim 9, **characterized in that** the individual products (2) are fed to the feed opening (19) in an order-related manner.

11. Method as claimed in claim 9 or 10, **characterized by** an order-related presorting in a sorting unit (8) of the overhead conveyor installation (1).

12. Method as claimed in any one of claims 9 to 11, **characterized by** a sorting of the individual products (2) by a targeted loading of the individual products (2) into different conveyor tracks (18; 18b).

## Revendications

1. Installation de transport suspendu (1) comprenant
- un poste d'emballage (14) sur lequel des marchandises individuelles (2) mises à disposition en fonction des commandes sont emballées, et
- un dispositif (13 ; 13a ; 13b), qui comporte
a. un dispositif de transport (11, 30) pour le transport suspendu des marchandises individuelles (2),
b. un poste de déchargement (12) pour le déchargement des marchandises individuelles (2),
c. une voie de transport (18 ; 18a ; 18b) comportant
i. une ouverture d'amenée (19) par le biais de laquelle les marchandises individuelles (2) déchargées sur le poste de déchargement (12) peuvent être amenées à la voie de transport (18 ; 18a ; 18b), l'ouverture d'amenée (19) étant agencée avec un angle d'inclinaison d'amenée de 45° maximum par rapport à un plan horizontal,
ii. une ouverture de distribution (20) reliée à l'ouverture d'amenée (19) quant au transport, l'ouverture de distribution (20) étant agencée avec un angle d'inclinaison de distribution de 45° maximum par rapport à un plan vertical,
iii. une direction de transport (21) prédéfinie par la voie de transport (18 ; 18a ; 18b), qui est orientée dans le sens de l'ouverture d'amenée (19) à l'ouverture de distribution (20),
d. une zone de dépôt (27 ; 27a ; 27b) pour le dépôt de marchandises individuelles (2) d'une seconde commande (15),
dans laquelle
- au moyen du dispositif (13 ; 13a ; 13b), les marchandises individuelles (2) de plusieurs commandes (15) sont mises à disposition sur le poste d'emballage (14) en fonction des commandes,
- des marchandises individuelles (2) d'une première commande (15) peuvent être mises à disposition sur le poste d'emballage (14) au niveau de l'ouverture de distribution (20),
- la zone de dépôt (27 ; 27a ; 27b) est agencée sur le poste d'emballage (14),
**caractérisée en ce que**
- un élément de signalisation (28) est présent pour signaler que les marchandises individuelles (2) d'une commande (15) complète sont mises à disposition à l'ouverture de distribution (20),
- un élément d'arrêt (24) pour arrêter le transport des marchandises individuelles (2) est agencé à l'ouverture de distribution (20).

2. Installation de transport suspendu (1) selon la revendication 1, **caractérisée en ce que** la zone de dépôt (27 ; 27a ; 27b) est agencée dans une seconde voie de transport (18b) qui est réalisée avec une seconde ouverture d'amenée (19) pour amener les marchandises individuelles (2) de la seconde commande (15) et avec une seconde ouverture de distribution (20) reliée à la seconde ouverture d'amenée (19) quant au transport pour mettre à disposition les marchandises individuelles (2) de la seconde commande sur le poste d'emballage (14).

3. Installation de transport suspendu (1) selon l'une des revendications précédentes, **caractérisée en ce qu'**un élément de séparation (22 ; 22a) pour séparer les marchandises individuelles (2) de différentes commandes (15) est agencé le long de la voie de transport (18 ; 18a ; 18b).

4. Installation de transport suspendu (1) selon l'une des revendications précédentes, **caractérisée par** plusieurs voies de transport (18 ; 18b) qui présentent chacune en particulier une ouverture d'amenée (19) et une ouverture de distribution (20), les ouvertures d'amenée (19) et/ou les ouvertures de distribution (20) étant agencées à la manière d'une matrice, en particulier en lignes et en colonnes.

5. Installation de transport suspendu (1) selon l'une des revendications précédentes, **caractérisée en ce que** l'ouverture d'amenée (19) est agencée avec un angle d'inclinaison d'amenée de 30° maximum, en particulier 15° maximum, en particulier 5° maximum, par rapport à un plan horizontal et est en particulier orientée horizontalement.

6. Installation de transport suspendu (1) selon l'une des revendications précédentes, **caractérisée en ce que** l'ouverture de distribution (20) est agencée avec un angle d'inclinaison de distribution de 30° maximum, en particulier 15° maximum, en particulier 5° maximum, par rapport à un plan vertical et est en particulier orientée verticalement.

7. Installation de transport suspendu (1) selon l'une des revendications précédentes, **caractérisée en ce que** la voie de transport (18 ; 18a ; 18b) est réalisée, au moins sur certaines parties, inclinée par rapport à l'horizontale.

8. Installation de transport suspendu (1) selon l'une des revendications précédentes, **caractérisée par** un capteur (25) destiné à détecter les marchandises individuelles (2) distribuées sur la voie de transport (18 ; 18a ; 18b).

9. Procédé de mise à disposition, en fonction des commandes, de marchandises individuelles (2) de plusieurs commandes (15) sur un poste d'emballage (14) d'une installation de transport suspendu (1) selon l'une des revendications précédentes, comportant les étapes de procédé
- transport suspendu des marchandises individuelles (2) au moyen d'un dispositif de transport (11, 30) jusqu'à un poste de déchargement (12),
- déchargement des marchandises individuelles (2) sur le poste de déchargement (12),
- amenée des marchandises individuelles (2) déchargées sur le poste de déchargement (12) à une voie de transport (18 ; 18a ; 18b) par le biais d'une ouverture d'amenée (19),
- transport des marchandises individuelles (2) le long de la voie de transport (18 ; 18a ; 18b),
- mise à disposition de marchandises individuelles (2) d'une première commande au niveau d'une ouverture de distribution (20) sur le poste d'emballage (14),
- emballage des marchandises individuelles (2) de la première commande sur le poste d'emballage (14),
- enlèvement de la première commande emballée du poste d'emballage (14),
- dépôt de marchandises individuelles (2) d'une seconde commande dans une zone de dépôt (27 ; 27a ; 27b),
- mise à disposition des marchandises individuelles (2) de la seconde commande sur le poste d'emballage (14) après l'enlèvement de la première commande emballée.

10. Procédé selon la revendication 9, **caractérisé en ce que** les marchandises individuelles (2) sont amenées à l'ouverture d'amenée (19) en fonction des commandes.

11. Procédé selon la revendication 9 ou 10, **caractérisé par** un tri préalable en fonction des commandes dans une unité de tri (8) de l'installation de transport suspendu (1).

12. Procédé selon l'une des revendications 9 à 11, **caractérisé par** un tri des marchandises individuelles (2) par distribution ciblée des marchandises individuelles (2) sur différentes voies de transport (18 ; 18b).
